# EUROPEAN PATENT APPLICATION

(11) **EP 4 052 846 A1**
(43) Date of publication of application: **07.09.2022**
(21) Application number: 20883533.0
(22) Date of filing: 08.10.2020
(51) Int. Cl.: B25B 9/02, B26D 1/00, B32B 18/00, H05F 3/04, G01B 7/00, B65H 57/24, B02C 19/08, C04B 35/488, H01L 21/67, H05K 13/04, B25J 15/06

(54) **CERAMIC STRUCTURE, ADSORPTION NOZZLE, CUTTER, TWEEZERS, WEAR DETECTION APPARATUS, POWDER ELECTRIC CHARGE ELIMINATION DEVICE, POWDER PRODUCTION DEVICE, LIFTING PIN, CONVEYING HAND, AND FIBER GUIDE**

(30) Priority: 29.10.2019 JP 2019196410
(71) Applicant: Kyocera Corporation, Kyoto-shi Kyoto 612-8501 (JP)
(72) Inventor: MIKAKI, Shunji, Kyoto-shi, Kyoto 612-8501 (JP)
(74) Representative: Viering, Jentschura & Partner mbB Patent- und Rechtsanwälte
(86) International application number: PCT/JP2020/038214
(87) International publication number: WO 2021/085073

(57) **Abstract**

A ceramic structure (1) is formed of a ceramic containing metal oxide particles having electrical conductivity, and includes a surface (1a) having a distribution amount of the metal oxide particles smaller than that of the inside.

## Description

### Technical Field

Embodiments of the disclosure relate to a ceramic structure, a suction nozzle, a cutter, tweezers, a wear detector, a powder static eliminator, a powder manufacturing device, a lift pin, a transport hand, and a fiber guide.

### Background Art

Conventionally, there is a known ceramic structure having electrical conductivity intermediate between an insulating property and electrical conductivity (hereinafter, also referred to as "semiconductivity") by distributing metal oxide particles inside a ceramic material having excellent mechanical characteristics (see, for example, Patent Document 1).

### Citation List

### Patent Literature

Patent Document 1: WO 2009/099184

### Summary of Invention

A ceramic structure according to an aspect of an embodiment is formed of a ceramic containing metal oxide particles having electrical conductivity, and includes a surface where a distribution amount of the metal oxide particles is smaller than that in the inside.

### Brief Description of Drawings

FIG. 1 is a perspective view of a suction nozzle assembly according to an embodiment.
FIG. 2 is a vertical cross-sectional view of the suction nozzle assembly according to the embodiment.
FIG. 3 is a perspective view of a cutter according to the embodiment.
FIG. 4 is a cross-sectional view of the cutter according to the embodiment.
FIG. 5 is a perspective view of tweezers according to the embodiment.
FIG. 6 is a perspective view of a wear detector according to the embodiment.
FIG. 7 is a cross-sectional view of a powder static eliminator according to the embodiment.
FIG. 8 is a perspective view of the powder manufacturing device according to the embodiment.
FIG. 9 is a perspective view of a lift pin according to the embodiment.
FIG. 10 is a cross-sectional view taken along a line X-X in FIG. 9.
FIG. 11 is a top view of a transport hand according to the embodiment.
FIG. 12 is a perspective view of an oiling nozzle, serving as an example of a fiber guide according to the embodiment.
FIG. 13 is a perspective view of a roller guide serving as an example of the fiber guide according to the embodiment.
FIG. 14 is a perspective view of a rod guide serving as an example of the fiber guide according to the embodiment.
FIG. 15 is a perspective view of a traverse guide serving as an example of the fiber guide according to the embodiment.
FIG. 16 is an SEM observation photograph of a surface of a ceramic structure.
FIG. 17 is an SEM observation photograph of the inside of the ceramic structure.

### Description of Embodiments

With reference to the accompanying drawings, embodiments of a ceramic structure, a suction nozzle, a cutter, tweezers, a wear detector, a powder static eliminator, a powder manufacturing device, a lift pin, a transport hand, and a fiber guide disclosed herein will be described below. The disclosure is not limited by the following embodiments.

Conventionally, there is a known ceramic structure having electrical conductivity intermediate between an insulating property and electrical conductivity (hereinafter, also referred to as "semiconductivity") by distributing metal oxide particles inside a ceramic material having excellent mechanical characteristics.

For example, by imparting semiconductivity to a suction nozzle of a ceramic used for mounting an electronic component having a chip shape, static electricity charged to the electronic component can be removed when the electronic component is suctioned.

However, in conventional techniques, many metal oxide particles are also distributed on a surface of the ceramic structure, and thus there are problems in that, for example, the surface strength of the ceramic structure decreases due to such metal oxide particles.

Furthermore, in the conventional techniques, the metal oxide particles distributed on the surface may break off, and thus the broken off metal oxide particles may become impurities (particles).

Thus, it is expected that a ceramic structure will be achieved that is capable of overcoming the above-described problems and improving the strength of the surface while having semiconductivity.

### Suction Nozzle Assembly

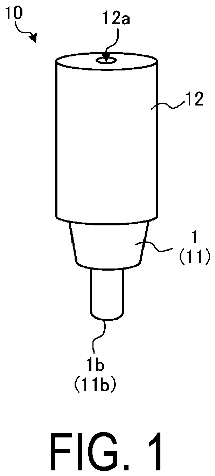

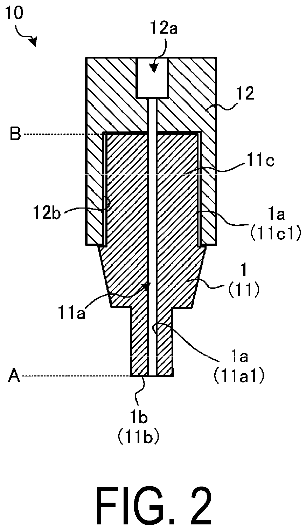

First, a configuration of a suction nozzle assembly 10 to which a ceramic structure 1 according to an embodiment is applied will be described with reference to FIGS. 1 and 2. FIG. 1 is a perspective view of the suction nozzle assembly 10 according to the embodiment, and FIG. 2 is a vertical cross-sectional view of the suction nozzle assembly 10 according to the embodiment.

As illustrated in FIG. 1 and the like, the suction nozzle assembly 10 according to the embodiment includes a suction nozzle 11 and a flange 12. The suction nozzle 11 has a substantially cylindrical shape, and includes a through hole 11a, a suction surface 11b, and a mounting portion 11c.

The through hole 11a is formed from a leading end portion A to a rear end portion B of the suction nozzle 11. The suction surface 11b is a surface provided in the leading end portion A and in contact with an electronic component to be suctioned. The mounting portion 11c is a portion provided to include the rear end portion B and is mounted on the flange 12.

As illustrated in FIG. 2, the flange 12 includes a communication hole 12a connected to the through hole 11a of the suction nozzle 11 and an inner peripheral surface 12b, and is a tubular body including and containing the rear end portion B of the suction nozzle 11.

In the suction nozzle assembly 10 according to the embodiment, the communication hole 12a included in the flange 12 and the through hole 11a included in the suction nozzle 11 are connected to each other to function as a suctioning hole for applying suction to the electronic components and the like.

Note that the term "contain" need not mean that the inner peripheral surface 12b of the flange 12 faces the entirety of the peripheral direction of the outer periphery of the suction nozzle 11, and as long as the suction nozzle 11 and the flange 12 can be combined, an outer peripheral surface closer to the rear end portion B side of the suction nozzle 11 may be exposed.

The suction nozzle 11 is formed of the ceramic structure 1 according to the embodiment. The ceramic structure 1 includes a ceramic containing metal oxide particles having electrical conductivity, and has semiconductivity. The ceramic structure 1 according to the embodiment has, for example, a resistance value in a range from 10³ (Ω•cm) to 10⁶ (Q•cm).

Here, the ceramic structure 1 according to the embodiment includes a surface 1a having a distribution amount of the metal oxide particles smaller than that in the inside. The surface 1a is, for example, a baked surface of the ceramic structure 1. Note that, in the present disclosure, "distribution amount of the metal oxide particles" is a distribution area of the metal oxide particles per unit area.

As described above, by making the distribution amount of the metal oxide particles on the surface 1a smaller than that inside, the amount of the metal oxide particles having a lower strength than the ceramic serving as a base material on the surface 1a is reduced, and thus the strength of the surface 1a can be improved.

For example, a surface 11c1 of the mounting portion 11c in the suction nozzle 11 corresponds to the surface 1a of the ceramic structure 1. As described above, by making the distribution amount of the metal oxide particles on the surface 11c1 of the mounting portion 11c smaller than that inside, the strength of the mounting portion 11c can be improved.

Thus, according to the embodiment, the suction nozzle 11 can be firmly mounted on the flange 12.

Furthermore, by making the distribution amount of the metal oxide particles on the surface 1a smaller than that inside, an amount of the metal oxide particles broken loose from the surface 1a can be reduced.

For example, an inner wall surface 11a1 of the through hole 11a in the suction nozzle 11 corresponds to the surface 1a of the ceramic structure 1. As described above, by making the distribution amount of the metal oxide particles on the inner wall surface 11a1 of the through hole 11a smaller than that in the inside, the metal oxide particles can be prevented from breaking loose from the inner wall surface 11a1 when the electronic component is sanctioned.

Accordingly, according to the embodiment, it is possible to prevent the metal oxide particles from breaking loose and becoming particles in the through hole 11a.

The ceramic structure 1 according to the embodiment may include a surface 1b having a distribution amount of the metal oxide particles substantially equal to that inside. The surface 1b is, for example, a polished surface formed by polishing the baked surface of the ceramic structure 1.

As described above, by making the distribution amount of the metal oxide particles on the surface 1b substantially equal to that inside, the distribution amount of the metal oxide particles can be larger than that on the surface 1a as the baked surface, and thus the electrical conductivity of the surface 1b can be improved over the electrical conductivity of the surface 1a.

For example, the suction surface 11b of the suction nozzle 11 corresponds to the surface 1b of the ceramic structure 1. As described above, by making the distribution amount of the metal oxide particles on the suction surface 11b substantially equal to that inside, static electricity can be efficiently discharged from the electronic component in contact with the suction surface 11b.

Next, details of the suction nozzle 11 will be described. The main component of the suction nozzle 11, in other words, the ceramic structure 1, is preferably zirconia (ZrO₂), alumina (Al₂O₃), a zirconia-alumina composite, or silicon carbide (SiC). Thus, high mechanical characteristics can be imparted to the ceramic structure 1.

Note that "main component" in the present disclosure means 55% by mass or more when the total amount of the constituent components is 100% by mass. Note that "a zirconia-alumina composite is a main component" refers to a composite in which the total of a content of zirconia and alumina is 55% by mass or more and may be not only a composite with a high zirconia content but also a composite with a high alumina content.

The main component of the metal oxide particles contained in the ceramic structure 1 is preferably iron oxide (Fe₂O₃), chromium oxide (Cr₂O₃) or titanium oxide (TiO₂). Thus, semiconductivity can be imparted to the ceramic structure 1 having high mechanical characteristics.

For example, in a case where the suction nozzle 11 is formed of an electrically conductive material, static electricity is excessively discharged from the electronic component, and thus sparks may be generated due to the static electricity. On the other hand, in a case where the suction nozzle 11 is formed of an insulating material, it is not possible to discharge the static electricity from the electronic component at all.

However, in the suction nozzle assembly 10 according to the embodiment, the ceramic structure 1 having semiconductivity is applied to the suction nozzle 11, and thus it is possible to appropriately discharge the suctioned electronic component during a period from the suction of the electronic component to the setting of the electronic component on the circuit board.

The flange 12 is formed of, for example, a metal member such as a stainless steel member or an aluminum alloy member. Note that in the suction nozzle assembly 10, the suction nozzle 11 and the flange 12 may be integrated by fitting, or may be integrated using an adhesive.

In a case where the suction nozzle 11 and the flange 12 are integrated using the adhesive, it is preferable to impart electrical conductivity to the adhesive. Thus, the static electricity discharged from the electronic component can be released to the flange 12 via the adhesive, and thus the static electricity can be stably discharged from the electronic component.

### Cutter

An object to which the ceramic structure 1 described above is applicable is not limited to the suction nozzle 11 of the suction nozzle assembly 10. Thus, in the following embodiments, examples will be described in which the ceramic structure 1 is applied to other various objects.

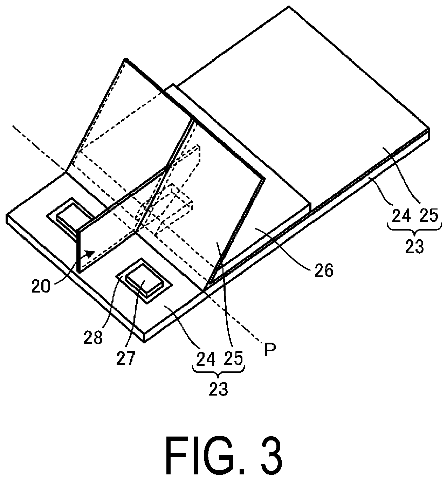

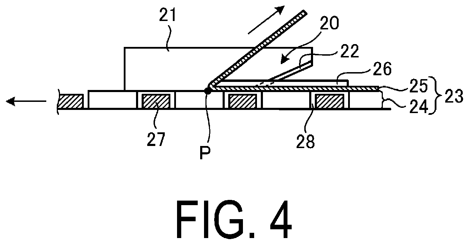

First, a configuration of a cutter 20 to which the ceramic structure 1 according to the embodiment is applied will be described with reference to FIGS. 3 and 4. FIG. 3 is a perspective view of the cutter 20 according to the embodiment, and FIG. 4 is a cross-sectional view of the cutter 20 according to the embodiment.

Note that FIGS. 3 and 4 illustrate a configuration in which a cover tape 25 of an electronic component storage tape 23 in which electronic components 27 each having a chip shape are stored is cut by the cutter 20.

The cutter 20 is formed of the ceramic structure 1 according to the embodiment. As illustrated in FIG. 4, the cutter 20 includes a mounting portion 21 mounted on a support means (not illustrated) and a cutting edge 22 that has been sharpened.

As illustrated in FIG. 3, the electronic component storage tape 23 includes a tape body 24 including a plurality of storage holes 28 of the electronic components 27, and a cover tape 25 covering an upper portion of the tape body 24 as well as the plurality of storage holes 28.

The cutter 20 is erected and disposed so as to be along a transport direction of the electronic component storage tape 23, and in FIGS. 3 and 4, an example is illustrated in which the cutter 20 is located in the center in the lateral direction of the cover tape 25, and a position P at which the cover tape 25 is peeled from the tape body 24 is indicated by a two-dot chain line. When cutting, it is preferable to suppress floating of the cover tape 25 by using a cover tape pressing means 26.

Next, a process of cutting the cover tape 25 by the cutter 20 and peeling the cover tape 25 from the tape body 24 will be described. First, the electronic component storage tape 23 is transported, and thus the cover tape 25 is cut to be divided into two by the cutting edge 22 of the cutter 20.

Then, each of these two separate cover tapes 25 is wound by cover tape winding means (not illustrated), and thus each of the cover tapes 25 can be peeled off from the tape body 24.

Here, in the cutter 20 according to the embodiment, the distribution amount of the metal oxide particles on the surface of the mounting portion 21 is smaller than the distribution amount of the metal oxide particles inside. As a result, the strength of the mounting portion 21 can be improved, and thus the cutter 20 can be firmly mounted on the support means.

Furthermore, in the cutter 20 according to the embodiment, the distribution amount of the metal oxide particles on the surface of the cutting edge 22 is substantially equal to the distribution amount of the metal oxide particles inside. As a result, the electrical conductivity of the cutting edge 22 can be improved, and thus static electricity can be efficiently discharged from each part of the electronic component storage tape 23 in contact with the cutting edge 22.

### Tweezers

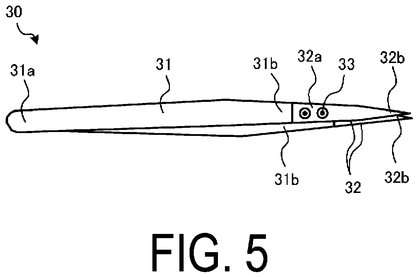

Next, a configuration of tweezers 30 to which the ceramic structure 1 according to the embodiment is applied will be described with reference to FIG. 5. FIG. 5 is a perspective view of the tweezers 30 according to the embodiment.

As illustrated in FIG. 5, the tweezers 30 according to the embodiment include a leg portion 31, a pair of shanks 32, and a plurality of fixing members 33. The leg portion 31 includes a plate-shaped body extending in a bifurcated manner from a base end portion 31a to a pair of leading end portions 31b, and the pair of leading end portions 31b are opened and closed so as to be in contact with and apart from each other. The leg portion 31 is formed of a metal, plastic, or the like.

Each of the pair of shanks 32 is mounted on a corresponding one of the pair of leading end portions 31b in the leg portion 31, and grips an article by closing the leg portion 31. Each of the pair of shanks 32 includes a mounting portion 32a mounted to corresponding one of the pair of leading end portions 31b of the leg portion 31 by using the plurality of fixing members 33 and a contact portion 32b in contact with the article to be gripped.

The pair of shanks 32 is formed of the ceramic structure 1 according to the embodiment. In the pair of shanks 32 according to the embodiment, the distribution amount of the metal oxide particles on the surface of the mounting portion 32a is smaller than the distribution amount of the metal oxide particles inside. As a result, the strength of the mounting portion 32a can be improved, and thus the pair of shanks 32 can be firmly mounted on the leg portion 31.

Furthermore, in the pair of shanks 32 according to the embodiment, the distribution amount of the metal oxide particles in the contact portion 32b is substantially equal to the distribution amount of the metal oxide particles inside. As a result, the electrical conductivity of the contact portion 32b can be improved, and thus static electricity can be efficiently discharged from the article in contact with the contact portion 32b.

### Wear Detector

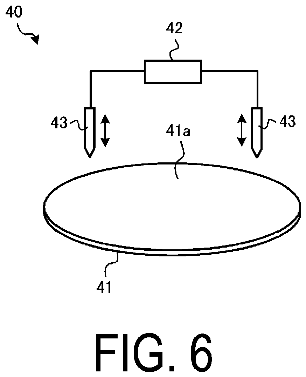

Next, a configuration of a wear detector 40 to which the ceramic structure 1 according to the embodiment is applied will be described with reference to FIG. 6. FIG. 6 is a perspective view of the wear detector 40 according to the embodiment.

The wear detector 40 includes a sliding body 41 and a resistance detector 42. The sliding body 41 includes a sliding surface 41a formed of the ceramic structure 1 according to the embodiment and sliding with another object (not illustrated).

Here, in a case where the sliding surface 41a of the sliding body 41 according to the embodiment is not worn, the distribution amount of the metal oxide particles on the sliding surface 41a is smaller than the distribution amount of the metal oxide particles inside. On the other hand, in a case where the sliding surface 41a is worn by sliding with another object, the distribution amount of the metal oxide particles on the sliding surface 41a is substantially equal to the distribution amount of the metal oxide particles inside.

In other words, the electrical resistance is reduced when the sliding surface 41a of the sliding body 41 slides and wears down another object. Then, in the wear detector 40 according to the embodiment, a change in the electrical resistance on the sliding surface 41a is detected by the resistance detector 42.

Specifically, the resistance detector 42 detects the electrical resistance of the sliding surface 41a by bringing a plurality (two in the drawing) of movable styluses 43 in contact with the sliding surface 41a. Thus, the change in the electrical resistance on the sliding surface 41a can be detected, and thus the wear detector 40 can evaluate the wear of the sliding surface 41a based on the detected change in the electrical resistance.

### Powder Static Eliminator

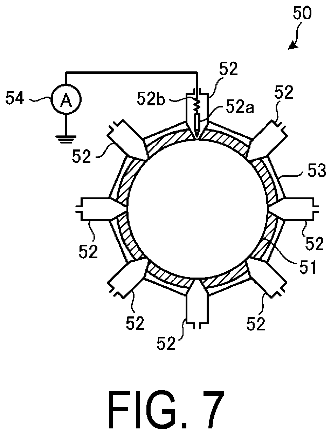

Next, a configuration of a powder static eliminator 50 to which the ceramic structure 1 according to the embodiment is applied will be described with reference to FIG. 7. FIG. 7 is a cross-sectional view of a powder static eliminator 50 according to the embodiment.

The powder static eliminator 50 according to the embodiment includes a holder 51, a plurality of ionizers 52, wiring 53, and a current meter 54. The holder 51 has a short tube shape, and is formed of the ceramic structure 1 according to the embodiment.

The plurality of ionizers 52 are nozzle type ionizers. In the example illustrated in FIG. 7, the plurality (eight in the drawing) of ionizers 52 are fixed at equal intervals in the peripheral direction of the holder 51. All of the plurality of ionizers 52 are electrically connected with each other by the wiring 53.

The plurality of ionizers 52 include a needle electrode 52a, which is grounded via a resistor 52b. Note that a current meter 54 is provided closer to the ground contact side with respect to the resistor 52b, the current meter 54 measuring a value of a current flowing from the needle electrode 52a to the ground contact side when corona discharge is generated from a needle tip of the needle electrode 52a.

Then, a charged powder to be discharged is passed through the inside of the holder 51, and the plurality of ionizers 52 are operated. As a result, ions generated by the plurality of ionizers 52 reach the powder, and thus the powder static eliminator 50 can discharge the powder.

In the powder static eliminator 50 according to the embodiment, the holder 51 is formed of the ceramic structure 1, and thus the distribution amount of the metal oxide particles on the surface of the holder 51 is smaller than the distribution amount of the metal oxide particles inside.

Accordingly, according to the embodiment, when the charged powder is passed through the inside of the holder 51, it is possible to prevent the metal oxide particles from breaking off from the surface of the holder 51 and generating particles.

### Powder Manufacturing Device

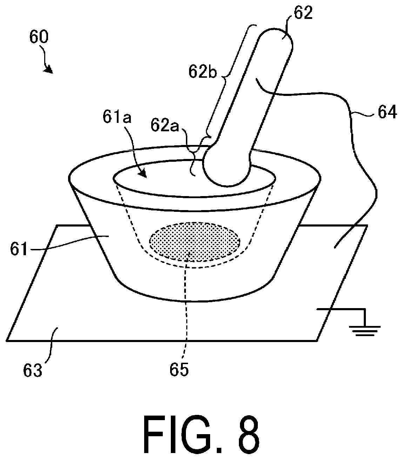

Next, a configuration of a powder manufacturing device 60 to which the ceramic structure 1 according to the embodiment is applied will be described with reference to FIG. 8. FIG. 8 is a perspective view of the powder manufacturing device 60 according to the embodiment.

As illustrated in FIG. 8, the powder manufacturing device 60 according to the embodiment includes a mortar 61, a pestle 62, an electrically conductive sheet 63, and an electrically conductive cable 64. The mortar 61 includes a recessed portion 61a into which a raw material 65 of the powder can be fed, and is formed of the ceramic structure 1 according to the embodiment.

The mortar 61 is placed on the electrically conductive sheet 63, which is electrically grounded and formed of, for example, Cu or Al, and a bottom surface of the mortar 61 is in contact with the electrically conductive sheet 63.

The pestle 62 is used for mixing or grinding the raw material 65 fed into the recessed portion 61a of the mortar 61, and is formed of the ceramic structure 1 according to the embodiment. The pestle 62 includes an abutting portion 62a pressed against the raw material 65 put into the recessed portion 61a of the mortar 61, and a shank 62b gripped by a worker.

A first end of the electrically conductive cable 64 formed of, for example, Cu is connected to the shank 62b of the pestle 62 via an electrically conductive adhesive, a connection terminal (not illustrated), or the like. A second end of the electrically conductive cable 64 is electrically grounded via the electrically conductive sheet 63.

Furthermore, in the powder manufacturing device 60 according to the embodiment, a powder can be produced from the raw material 65 by grinding the raw material 65 put into the recessed portion 61a of the mortar 61 by crushing or smashing the raw material 65 with the pestle 62 while the raw material 65 that has been ground is stirred and mixed by the pestle 62.

Here, in the powder manufacturing device 60 according to the embodiment, the mortar 61 and the pestle 62 are formed of the ceramic structure 1 having semiconductivity, and thus it is possible to prevent the raw material 65 and the produced powder from being charged when the powder is manufactured from the raw material 65.

Furthermore, in the powder manufacturing device 60 according to the embodiment, the mortar 61 and the pestle 62 are formed of the ceramic structure 1, and thus the distribution amount of the metal oxide particles on the surface of the holder 51 is smaller than the distribution amount of the metal oxide particles inside.

Accordingly, according to the embodiment, when the powder is manufactured from the raw material 65, it is possible to prevent the metal oxide particles from breaking off from the surface of the mortar 61 and the pestle 62 and generating particles.

### Lift Pin

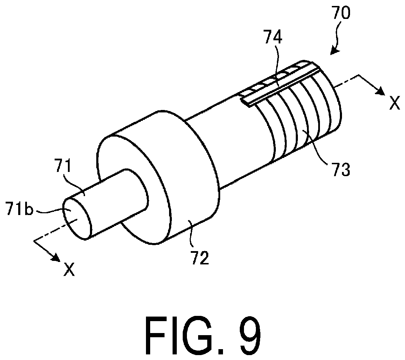

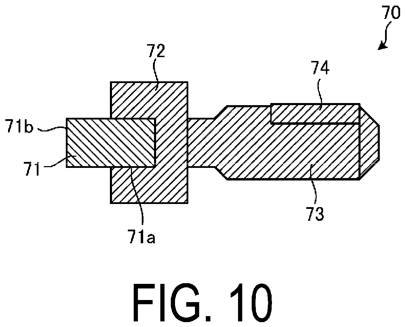

Next, a configuration of a lift pin 70 to which the ceramic structure 1 according to the embodiment is applied will be described with reference to FIGS. 9 and 10. FIG. 9 is a perspective view of the lift pin 70 according to the embodiment, and FIG. 10 is a cross-sectional view taken along a line X-X illustrated in FIG. 9.

The lift pin 70 according to the embodiment functions to support a substrate away from a placement surface in a semiconductor manufacturing device for performing various processes on the substrate such as a wafer (not illustrated), a semiconductor inspection device for inspecting a defect on a surface of the substrate, or the like. As illustrated in FIG. 9 or the like, the lift pin 70 includes a leading end portion 71, a connecting portion 72, and a rear end portion 73 in order from the side in contact with the substrate.

As illustrated in FIG. 10, the leading end portion 71 includes a mounting portion 71a mounted to the connecting portion 72 and a contact surface 71b in contact with the substrate, and is formed of the ceramic structure 1. As described above, the leading end portion 71 in contact with the substrate is formed of the ceramic structure 1 having semiconductivity, and thus, the charge accumulated in the substrate can be efficiently passed through to the outside.

Accordingly, according to the embodiment, the substrate can be prevented from rising from the lift pin 70, and the substrate can be stably supported.

The mounting portion 71a of the leading end portion 71 is joined to the connecting portion 72 by press fitting or the electrically conductive adhesive, and the rear end portion 73 having a continuous screw shape is provided closer to a rear end surface side of the connecting portion 72. Furthermore, the connecting portion 72 and the rear end portion 73 are integrally formed of metal.

In the connecting portion 72, a diameter of an end surface closer to the leading end portion 71 side is preferably larger than a diameter of a rear end surface of the leading end portion 71 (= diameter closer to the rear end portion 73 side). As a result, the leading end portion 71 of the ceramic having semiconductivity can be firmly joined to the connecting portion 72 of metal by press fitting.

By using the press-fitting for joining the leading end portion 71 and the connecting portion 72 with each other, it is possible to perform more firm joining without losing the electrical conductivity of the entire lift pin 70 as compared with a case where performing joining with the adhesive.

Here, in the lift pin 70 according to the embodiment, the distribution amount of the metal oxide particles on the surface of the mounting portion 71a of the leading end portion 71 is smaller than the distribution amount of the metal oxide particles inside. As a result, the strength of the mounting portion 71a can be improved, and thus the leading end portion 71 can be firmly mounted on the connecting portion 72.

Furthermore, in the lift pin 70 according to the embodiment, the distribution amount of the metal oxide particles on the contact surface 71b of the leading end portion 71 is substantially equal to the distribution amount of the metal oxide particles inside. As a result, the electrical conductivity of the contact surface 71b can be improved, and thus the charge accumulated in the substrate can be further efficiently passed through to the outside.

### Transport Hand

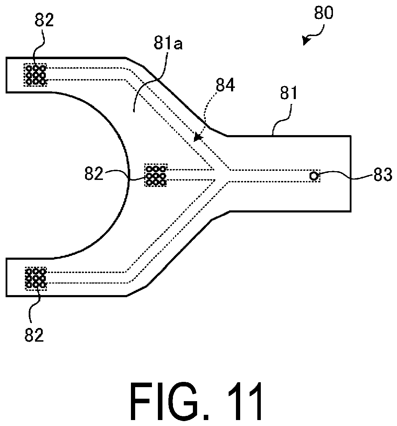

Next, a configuration of a transport hand 80 to which the ceramic structure 1 according to the embodiment is applied will be described with reference to FIG. 11. FIG. 11 is a top view of the transport hand 80 according to the embodiment.

The transport hand 80 according to the embodiment is a hand for transporting a substrate in a semiconductor manufacturing device for performing various processes on the substrate such as a wafer (not illustrated), a semiconductor inspection device for inspecting a defect on a surface of the substrate, or the like.

The transport hand 80 includes a base 81 substantially Y-shaped in a top view, and the base 81 is formed of the ceramic structure 1 according to the embodiment. In the transport hand 80, the substrate is placed on a placement surface 81a of the base 81, and the substrate is held by adsorbing the substrate from a plurality of suction ports 82 formed on the placement surface 81a.

A channel 84 connecting the plurality of suction ports 82 and a suction port 83 connected to suction means (not illustrated) is formed inside the base 81.

Here, in the embodiment, the base 81 of the transport hand 80 is formed of the ceramic structure 1. As described above, the base 81 in contact with the substrate is formed of the ceramic structure 1 having semiconductivity, and thus, the charge accumulated in the substrate can be efficiently passed through to the outside.

Accordingly, according to the embodiment, the substrate can be prevented from rising from the transport hand 80, and the substrate can be stably held.

In the embodiment, the distribution amount of the metal oxide particles on an inner wall surface of the channel 84 is smaller than the distribution amount of the metal oxide particles inside. Accordingly, according to the embodiment, when the substrate is suctioned, it is possible to prevent the metal oxide particles from breaking off from the inner wall surface of the channel 84 and generating particles.

Furthermore, in the embodiment, the distribution amount of the metal oxide particles on the placement surface 81a of the base 81 is substantially equal to the distribution amount of the metal oxide particles inside. As a result, the electrical conductivity of the placement surface 81a can be improved, and thus the charge accumulated in the substrate can be further efficiently passed through to the outside.

### Fiber Guide

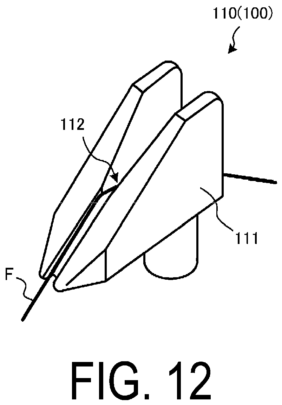

Next, a configuration of a fiber guide 100 to which the ceramic structure 1 according to the embodiment is applied will be described with reference to FIGS. 12 to 15. FIG. 12 is a perspective view of an oiling nozzle 110, serving as an example of the fiber guide 100 according to the embodiment.

The oiling nozzle 110 illustrated in FIG. 12 is used for applying oil to a fiber F which slides. As illustrated in FIG. 12, the oiling nozzle 110 includes a main body portion 111 and a yarn guiding portion 112 having a groove shape located on an upper portion of the main body portion 111 and being in contact with the fiber F. The yarn guiding portion 112 includes a guide portion for guiding the fiber F, an application portion for applying oil to the fiber F, and a delivery portion for delivering the fiber F.

Here, in the oiling nozzle 110 according to the embodiment, the main body portion 111 is formed of the ceramic structure 1. As described above, the main body portion 111 in contact with the fiber F is formed of the ceramic structure 1 having semiconductivity, and thus, it is possible to efficiently discharge static electricity generated when the fiber F slides.

Furthermore, in the oiling nozzle 110 according to the embodiment, the distribution amount of the metal oxide particles on the surface of the yarn guiding portion 112 is substantially equal to the distribution amount of the metal oxide particles inside. As a result, the electrical conductivity of the yarn guiding portion 112 can be improved, and thus it is possible to efficiently discharge the static electricity generated when the fiber F slides.

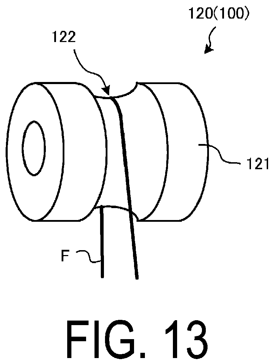

FIG. 13 is a perspective view of a roller guide 120 serving as an example of the fiber guide 100 according to the embodiment. The roller guide 120 illustrated in FIG. 13 guides the fiber F while rotating. As illustrated in FIG. 13, the roller guide 120 includes a main body portion 121 having a cylindrical shape and a yarn guiding portion 122 having a V groove shape located on a side surface of the main body portion 121 and being in contact with the fiber F.

Here, in the roller guide 120 according to the embodiment, the main body portion 121 is formed of the ceramic structure 1. As described above, the main body portion 121 in contact with the fiber F is formed of the ceramic structure 1 having semiconductivity, and thus, it is possible to efficiently discharge the static electricity generated when the fiber F slides.

Furthermore, in the roller guide 120 according to the embodiment, the distribution amount of the metal oxide particles on the surface of the yarn guiding portion 122 is substantially equal to the distribution amount of the metal oxide particles inside. As a result, the electrical conductivity of the yarn guiding portion 122 can be improved, and thus it is possible to efficiently discharge the static electricity generated when the fiber F slides.

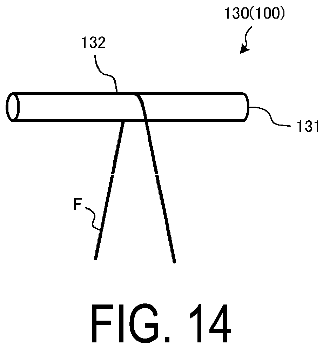

FIG. 14 is a perspective view of a rod guide 130 serving as an example of the fiber guide 100 according to the embodiment. The rod guide 130 illustrated in FIG. 14 is used to converge or separate the fiber F. As illustrated in FIG. 14, the rod guide 130 includes a main body portion 131 having a cylindrical shape and a yarn guiding portion 132 located on a side surface of the main body portion 131.

Here, in the rod guide 130 according to the embodiment, the main body portion 131 is formed of the ceramic structure 1. As described above, the main body portion 131 in contact with the fiber F is formed of the ceramic structure 1 having semiconductivity, and thus, it is possible to efficiently discharge the static electricity generated when the fiber F slides.

Furthermore, in the rod guide 130 according to the embodiment, the distribution amount of the metal oxide particles on the surface of the yarn guiding portion 132 is substantially equal to the distribution amount of the metal oxide particles inside. As a result, the electrical conductivity of the yarn guiding portion 132 can be improved, and thus it is possible to efficiently discharge the static electricity generated when the fiber F slides.

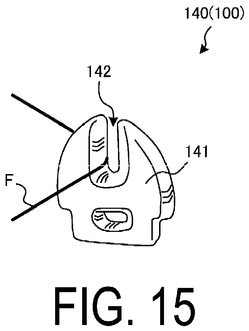

FIG. 15 is a perspective view of a traverse guide 140 serving as an example of the fiber guide 100 according to the embodiment. The traverse guide 140 illustrated in FIG. 15 is used for guiding when the fiber F is wound around the outer circumference of a package having a cylindrical shape. As illustrated in FIG. 15, the traverse guide 140 includes a main body portion 141 and a yarn guiding portion 142 having a U groove shape located on an upper portion of the main body portion 141 and being in contact with the fiber F.

Here, in the traverse guide 140 according to the embodiment, the main body portion 141 is formed of the ceramic structure 1. As described above, the main body portion 141 in contact with the fiber F is formed of the ceramic structure 1 having semiconductivity, and thus, it is possible to efficiently discharge the static electricity generated when the fiber F slides.

Furthermore, in the traverse guide 140 according to the embodiment, the distribution amount of the metal oxide particles on the surface of the yarn guiding portion 142 is substantially equal to the distribution amount of the metal oxide particles inside. As a result, the electrical conductivity of the yarn guiding portion 142 can be improved, and thus it is possible to efficiently discharge the static electricity generated when the fiber F slides.

### Examples

Hereinafter, examples of the present disclosure will be specifically described. Note that in the examples described below, the ceramic structure 1 containing zirconia as a main component is illustrated, but the present disclosure is not limited to the following examples.

First, a powder of zirconia serving as the main component was prepared. Then, a predetermined amount of solvent was added to the prepared zirconia powder and preliminarily grinding was performed by a rotary mill to obtain a first slurry. Here, the particle size distribution of the preliminarily ground zirconia powder was measured by a laser diffraction particle size distribution device (Microtrac particle size distribution measurement device MT-3300 manufactured by MicrotracBel Co., Ltd.), and the cumulative 50% particle size (D50) was found to be 0.190 µm.

In addition, in parallel with the above-described process, a powder of iron oxide, which is an electrically conductivity imparting agent and which becomes metal oxide particles distributed in the ceramic structure 1, and a powder of chromium oxide and titanium oxide, which are additives, are mixed in a predetermined ratio. Then, a predetermined amount of solvent was added to the prepared mixed powder and preliminarily grinding was performed by the rotary mill to obtain a second slurry.

Here, the particle size distribution of the preliminarily ground mixed powder was measured by the above-described laser diffraction particle size distribution device, and the cumulative 50% particle size (D50) was found to be 0.258 µm.

Next, the first slurry and the second slurry were prepared so that the ratio of zirconia: iron oxide: chromium oxide: titanium oxide was 69.6: 27.0: 3.0: 0.4 (% by mass), and the prepared slurries were ground by the rotary mill.

Here, a particle size distribution of the ground slurry was measured by the above-described laser diffraction particle size distribution device, and the cumulative 50% particle size (D50) was found to be 0.235 µm.

Next, a predetermined amount of various binders was added to the obtained slurry, and dried by spray drying method to form granules. Then, the obtained granules were molded into a powder compact having a desired shape using a desired molding method, such as dry pressing, cold isostatic pressing, or the like.

Next, the obtained powder compact was held in an air atmosphere at a temperature of from 1300°C to 1450°C for from 1 hour to 3 hours and fired, and thus the ceramic structure 1 according to the present disclosure was obtained. Note that the reason why the firing temperature was set to from 1300°C to 1450°C is that a dense sintered body cannot be obtained at a firing temperature of less than 1300°C and crystal grain size increases due to grain growth at a firing temperature of more than 1450°C, and the mechanical characteristics of the ceramic structure 1 tend to degrade in both cases.

Note that, impurities different from the components described above may be mixed in the raw material powder or during manufacturing processes; however, the impurities may only be contained as long as the amount is 2.0 or less parts by mass.

Then, with respect to the obtained sample, a surface 1a as the baked surface, was observed by a scanning electron microscope (SEM). Furthermore, with respect to the obtained sample, a predetermined portion was polished, and the polished surface was considered as the inside of the ceramic structure 1, and was similarly observed by the SEM.

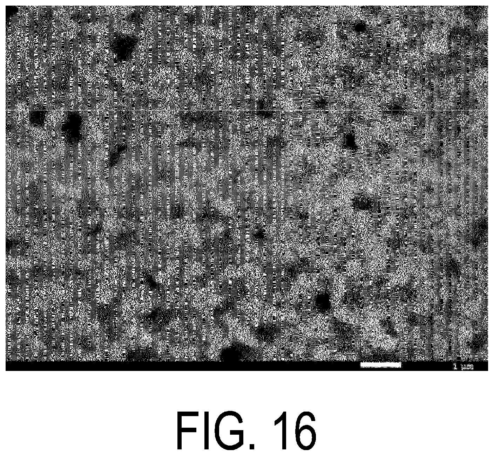

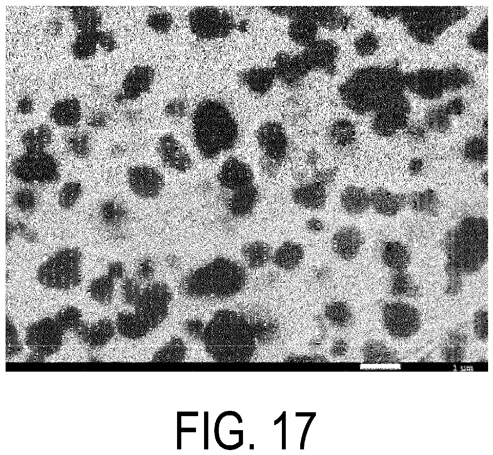

FIG. 16 is an SEM observation photograph of the surface 1a of the ceramic structure 1, and FIG. 17 is an SEM observation photograph of the inside of the ceramic structure 1. In the SEM observation photographs illustrated in FIGS. 16 and 17, dark-colored portions indicate the metal oxide particles.

As illustrated in FIGS. 16 and 17, it can be seen that the ceramic structure 1 according to the embodiment includes the surface 1a having a distribution amount of the metal oxide particles smaller than that of the inside.

This is presumably because, the zirconia powder serving as the main component is ground more finely than the powder of the other components (iron oxide, chromium oxide, and titanium oxide) and then fired, and thus the zirconia as the main component on the surface is sintered earlier than the other components on the surface, and thus the other components are less likely to be fired on the surface.

Furthermore, the inside of the ceramic structure 1 illustrated in FIG. 17 is in a state equivalent to the surface 1b serving as the polished surface of the ceramic structure 1, and thus it can be seen that the ceramic structure 1 whose surface is polished includes the surface 1b having a distribution amount of the metal oxide particles substantially equal to that in the inside.

Although embodiments of the present disclosure are described above, the present disclosure is not limited to the embodiments described above, and various modifications can be made without departing from the spirit thereof. For example, in the embodiments described above, examples are illustrated in which the ceramic structure 1 is applied to various objects in a state where the surface 1a of the ceramic structure 1 is exposed, but may be applied to various objects with the surface 1a further being subjected to an electrically conductive coating.

As the electrically conductive coating, diamond-like carbon (DLC), Teflon (trade name), silicon or the like to which an electrically conductive component is added can be applied.

As described above, inclusions such as iron oxide can be prevented from breaking off from the surface 1a to the outside, while maintaining the semiconductivity of the ceramic structure 1. Thus, the content of the ceramic structure 1 can be prevented from breaking off as impurities in an environment where the impurities should be avoided such as semiconductor manufacturing processes and precision analysis.

In addition, in this example, since the electrically conductive component (metal oxide particles) is recessed at the surface 1a of the ceramic structure 1, the electrically conductive coating film enters the recessed portion, and thus it is possible to obtain an anchoring effect.

Additional effects and other aspects can be easily derived by a person skilled in the art. Thus, a wide variety of aspects of the present disclosure are not limited to the specific details and representative embodiments represented and described above. Accordingly, various changes are possible without departing from the spirit or scope of the general disclosed concepts defined by the appended claims and their equivalents.

### Reference Signs List

1: Ceramic structure
1a, 1b Surface
10 Suction nozzle assembly
11 Suction nozzle
11a Through hole
11a1 Inner wall surface
11b Suction surface
11c Mounting portion
11c1 Surface
12 Flange
20 Cutter
21 Mounting portion
22 Cutting edge
30 Tweezers
31 Leg portion
32 Shank
32a Mounting portion
32b Contact portion
40 Wear detector
41 Sliding body
41a Sliding surface
42 Resistance detector
50 Powder static eliminator
51 Holder
52 Ionizer
60 Powder manufacturing device
61 Mortar
62 Pestle
70 Lift pin
71 Leading end portion
71a Mounting portion
71b Contact surface
80 Transport Hand
81 Base
81a Placement surface
82 Suction port
84 Channel
100 Fiber guide
110 Oiling nozzle
111 Main body portion
120 Roller guide
121 Main body portion
130 Rod guide
131 Main body portion
140 Traverse guide
141 Main body portion

## Claims

1. A ceramic structure, the ceramic structure being formed of a ceramic containing metal oxide particles having electrical conductivity, the ceramic structure comprising:
a surface having a distribution amount of the metal oxide particles smaller than that inside.

2. The ceramic structure according to claim 1, wherein
the distribution amount of the metal oxide particles is smaller on the entirety of the surface than inside.

3. The ceramic structure according to claim 1, further comprising:
a surface having a distribution amount of the metal oxide particles substantially equal to that inside.

4. The ceramic structure according to any one of claims 1 to 3, wherein
a main component of the ceramic is zirconia, alumina, a zirconia-alumina composite, or silicon carbide.

5. The ceramic structure according to any one of claims 1 to 4, wherein
a main component of the metal oxide particles is iron oxide, chromium oxide, or titanium oxide.

6. A suction nozzle, the suction nozzle being formed of the ceramic structure according to any one of claims 1 to 5, the suction nozzle comprising;
a through hole formed from a leading end portion to a rear end portion;
a suction surface provided in the leading end portion; and
a mounting portion provided to comprise the rear end portion and being mounted on a flange.

7. The suction nozzle according to claim 6, wherein
the distribution amount of the metal oxide particles is smaller on an inner wall surface of the through hole than inside.

8. The suction nozzle according to claim 6 or 7, wherein
the distribution amount of the metal oxide particles is smaller on a surface of the mounting portion than inside.

9. The suction nozzle according to any one of claims 6 to 8, wherein
the distribution amount of the metal oxide particles in the suction surface is substantially equal to that inside.

10. A cutter, the cutter being formed of the ceramic structure according to any one of claims 1 to 5, the cutter comprising:
a mounting portion mounted on a support means; and
a cutting edge, the cutting edge being sharpened.

11. The cutter according to claim 10, wherein
the distribution amount of the metal oxide particles is smaller on a surface of the mounting portion than inside.

12. The cutter according to claim 10 or 11, wherein
the distribution amount of the metal oxide particles on a surface of the cutting edge is substantially equal to that inside.

13. Tweezers comprising:
a leg portion extending in a bifurcated manner from a base end portion; and
a pair of shanks each mounted on a corresponding one of a pair of leading end portions of the leg portion and formed of the ceramic structure according to any one of claims 1 to 5, wherein
each of the pair of shanks comprises a mounting portion mounted on a corresponding one of the pair of leading end portions of the leg portion, and a contact portion in contact with an article to be gripped.

14. The tweezers according to claim 13, wherein
the distribution amount of the metal oxide particles is smaller on a surface of the mounting portion than inside.

15. A wear detector comprising:
a sliding body comprising a sliding surface sliding with another object and formed of the ceramic structure of any one of claims 1 to 5; and
a resistance detector configured to detect an electrical resistance of the sliding surface.

16. A powder static eliminator comprising:
a holder configured to enable passage of a powder to be discharged and formed of the ceramic structure according to any one of claims 1 to 5;
an ionizer configured to supply ions to the powder passing through the holder.

17. A powder manufacturing device comprising:
a mortar comprising a recessed portion into which a raw material is capable of being fed, and formed of the ceramic structure according to any one of claims 1 to 5; and
a pestle used for mixing or grinding the raw material fed into the recessed portion and formed of the ceramic structure according to any one of claims 1 to 5.

18. A lift pin comprising:
a leading end portion comprising a mounting portion mounted on a connecting portion and a contact surface in contact with a substrate, and formed of the ceramic structure according to any one of claims 1 to 5.

19. A transport hand comprising:
a base comprising a placement surface, a substrate being mounted on the placement surface, a suction port formed on the placement surface, and a channel connected to the suction port, and formed of the ceramic structure according to any one of claims 1 to 5.

20. A fiber guide comprising:
a main body portion formed of the ceramic structure according to any one of claims 1 to 5.
